**Europäisches Patentamt**

**European Patent Office**

**Office européen des brevets**

(19)

(11) Veröffentlichungsnummer: **0 084 670**
**B1**

(12)

# EUROPÄISCHE PATENTSCHRIFT

(45) Veröffentlichungstag der Patentschrift:
13.11.85

(51) Int. Cl.⁴: **C 08 G 18/60, C 14 C 11/00**

(21) Anmeldenummer: **82111945.0**

(22) Anmeldetag: **23.12.82**

(54) Verfahren zur Herstellung von alkoholischen Lösungen von Hochpolymeren und deren Verwendung zum Beschichten von Leder.

(30) Priorität: **26.01.82 DE 3202301**

(43) Veröffentlichungstag der Anmeldung:
**03.08.83 Patentblatt 83/31**

(45) Bekanntmachung des Hinweises auf die Patenterteilung:
**13.11.85 Patentblatt 85/46**

(84) Benannte Vertragsstaaten:
**CH DE FR GB IT LI**

(56) Entgegenhaltungen:
**BE - A - 519 847**
**DE - A - 2 101 478**
**DE - A - 2 942 860**

**CHEMICAL ABSTRACTS, Band 69, Nr. 12, 1968, Seite 4167, Nr. 44323m, Columbus, Ohio, USA G.A. SUTYRINA et al.: "Use of blocked diiscyanates for improving the properties of the finish coating for synthetic leather"**

(73) Patentinhaber: **BASF Aktiengesellschaft,
Carl-Bosch-Strasse 38, D-6700 Ludwigshafen (DE)**

(72) Erfinder: **Stutz, Herbert, Dr., Schneidemuehler
Strasse 9c, D-7500 Karlsruhe 1 (DE)**
Erfinder: **Reimann, Horst, Dr., Adelheidstrasse 26,
D-6520 Worms 1 (DE)**
Erfinder: **Eckert, Guenter, Dr., Flossbachstrasse 1,
D-6703 Limburgerhof (DE)**

## Beschreibung

Narbenleder bedarf zur Verbesserung seiner sensorischen (Griff) und vor allem optischen Eigenschaften (Farbe, Glanz) einer Oberflächenbeschichtung, sprich: Appretur.

Die Verwendung löslicher Polyamide zum Beschichten von Leder ist bekannt, beispielsweise aus DE-PS 755 617. Die bekannten Polyamide weisen jedoch eine Reihe von Mängeln auf, die ihre Brauchbarkeit erheblich einschränken. So entsprechen z. B. Elastizität und Naßreibechtheiten der Lederbeschichtungen häufig nicht den Anforderungen der Praxis.

Es ist auch bekannt, daß sich das mechanische Eigenschaftsbild von Polymeren durch Erhöhung der Molekulargewichte oft erheblich verbessern läßt. Durch die bei löslichen Polyamiden technisch alleine mögliche Schmelzkondensation können jedoch die dazu erforderlichen sehr hohen Molekulargewichte nicht erreicht werden.

Der Erfindung lag die Aufgabe zugrunde, ein Lederbeschichtungsmittel zu entwickeln, das insgesamt bessere Eigenschaften hat als die bisher zum Lederbeschichten verwendeten Polyamide, und daß insbesondere die oben geschilderten Nachteile vermeidet, also elastisch und naßreibecht ist.

Die Lösung dieser Aufgabe besteht in dem Verfahren nach Anspruch 1. Es wurde nämlich gefunden, daß nahezu beliebig hohe Molekulargewichte in reproduzierbarer Weise erhalten werden können, wenn man Polyamide mit Aminoendgruppen und Molekulargewichten von 800 bis 5000 in alkoholischen Lösungsmitteln mit stöchiometrischen Mengen aliphatischer und/oder cycloaliphatischer Diisocyanate umsetzt. Dies ist insofern überraschend, als zu erwarten war, daß die Reaktion der (gegenüber Aminogruppen zwar weniger reaktiven, dafür aber in sehr großem Überschuß vorhandenen) Hydroxylgruppen des Lösungsmittels mit den Isocyanatgruppen zum Kettenabbruch führen und damit den Aufbau hoher Molekulargewichte verhindern würde.

Es sind zwar bereits Verfahren zur Modifizierung von Polyamiden mit Diisocyanaten bekannt. So wird z. B. in der DE-OS 2 101 478 ein Verfahren beschrieben, nach dem Polyamide in der Schmelze mit 0,1 bis 10 Gew.-% aliphatischer oder cycloaliphatischer Diisocyanate bzw. Harnstoff kondensiert werden. Die dabei erhaltenen Produkte werden als auf Kunststoffolie gut haftende Bindemittel für Lacke und Farben mit guter Viskositätsstabilität sowie als Schmelzkleber, ferner zur Verarbeitung zu Folien und Preßmassen empfohlen. Der genannten Schrift ist jedoch nicht zu entnehmen, ob durch die Umsetzung mit dem Diisocyanat in der Schmelze bei 170 bis 180°C hohe Molekulargewichte erhalten werden. Die Kondensation in der Schmelze ist außerdem für eine reproduzierbare Herstellung ungeeignet, da durch die dazu nötigen hohen Temperaturen unkontrollierbare Nebenreaktionen der Isocyanate auftreten, die bis zu völliger Unlöslichkeit der Ansätze führen können. Auch wird die Anwendung zur Lederappretur nicht in Betracht gezogen.

Ferner wird in der BE-PS 519 847 eine Lederbeschichtung auf Basis löslicher Polyamide beschrieben, welche gegebenenfalls zur Erzielung eines wasserunlöslichen Finishs mit Isocyanaten modifiziert werden können. In der Schrift ist jedoch keine Rede vom Molekulargewicht der so erhältlichen Produkte, geschweige denn von einem sehr hohen Molekulargewicht und seiner Bedeutung für die Eigenschaften des Lederüberzugs, und insbesondere nicht von den Voraussetzungen für das reproduzierbare Erzielen derselben, nämlich die Einhaltung eines bestimmten Molekulargewichtes und Säuregehaltes der Ausgangspolyamide sowie eines äquimolaren Verhältnisses von Aminoendgruppen des Polyamids und der Isocyanatgruppen.

Erfindungsgegenstand ist ein Verfahren zur Herstellung von alkoholischen Lösungen von Hochpolymeren mit Grenzviskositätszahlen $[\eta]$ über 1,5, vorzugsweise zwischen 1,5 und 3,5 dl/g, wobei man aliphatische oder cycloaliphatische Polyamide mit Molekulargewichten zwischen 800 und 5000, vorzugsweise von 1000 bis 3000 und Säuregehalten unter 50, vorzugsweise unter 30 mVal/kg mit soviel mindestens eines aliphatischen und/oder cycloaliphatischen Diisocyanates in alkoholischer Lösung bei Temperaturen zwischen 20 und 80°C vermischt, daß das Verhältnis der Isocyanatgruppen zu den Aminoendgruppen des Polyamids zwischen 0,85 und 1,05, vorzugsweise möglichst nahe bei 1 liegt, sowie deren Verwendung zum Beschichten (bzw. Appretieren) von Leder. Bei Molekulargewichten der Ausgangspolyamide unter 1000, insbesondere unter 800, werden steigende Mengen des relativ teuren Diisocyanates erforderlich, so daß die Wirtschaftlichkeit des Verfahrens leidet. Bei Molekulargewichten über 3000, insbesondere über 5000, wird die Reproduzierbarkeit und damit die Konstanthaltung der Produktqualität zunehmend schwierig, weil dann bereits geringste Unterschiede in der relativen Diisocyanatmenge sehr große Schwankungen im Molekulargewicht des Endproduktes bewirken.

Für das erfindungsgemäße Verfahren geeignete Polyamide sind an sich bekannte und übliche aliphatische oder cycloaliphatische Polyamide, welche aufgrund ihrer relativ geringen Kristallinität in alkoholischen Lösungsmitteln oder alkoholhaltigen Lösungsmittelgemischen löslich sind.

Die Kristallinität der Polyamide läßt sich bekanntlich beispielsweise durch Kokondensation verschiedener Lactame, $\alpha$-Aminosäuren und/oder Diamine bzw. Dicarbonsäuren sowie durch Einbau sperriger Monomerer, wie Neopentandiamin (2,2-Dimethyl-1,3-propandiamin), 2,2,4-Trimethyl-hexamethylen-1,6-diamin, Isophorondiamin, 4,4'-Diaminodicyclohexylmethan, 3,3'-Dimethyl-4,4'-diaminodicyclohexylmethan, 2,2-Bis-(4-aminocyclohexyl)-propan reduzieren.

Die Herstellung der Polyamide erfolgt durch Kondensation der Ausgangsstoffe nach den dafür üblichen Verfahren, also Vorkondensation in der Schmelze in Gegenwart von wenig Wasser im geschlossenen System, dann Nachkondensation im offenen System unter Abführung des Wassers. Die gewünschten Molekulargewichte und die nötigen geringen Säuregehalte der Polyamide lassen sich über die Stöchiometrie durch Wahl eines entsprechenden Aminüberschusses einstellen.

Für das erfindungsgemäße Verfahren geeignete Diisocyanate sind die üblichen aliphatischen und cycloaliphatischen Diisocyanate, wie die des Ethans, Butans, Hexans, 2,2,4- oder 2,4,4-Trimethylhexans, Dekans, der Lysinester oder Diisocyanate auf Basis dimerisierter Fettsäure, wie Dimeryldiisocyanat oder cycloaliphatische Diisocyanate wie cis- bzw. trans-Cyclohexan-1,4-diisocyanat, 4,4'-Dicyclohexylmethandiisocyanat sowie Gemische der Isomeren.

Die Isocyanate können allein oder in Form beliebiger Mischungen untereinander oder nacheinander angewandt werden.

Die Umsetzung der Polyamide mit den Diisocyanaten erfolgt durch einfaches Vermischen der Komponenten in Lösung bei Temperaturen zwischen etwa 15 und 80° C, vorzugsweise bei Raumtemperatur, in alkoholischen Lösungsmitteln. Als solche kommen aliphatische einwertige Alkohole mit 1 bis 4, vorzugsweise 1 bis 3 Kohlenstoffatomen in Betracht, beispielsweise Methanol, Ethanol, Propanol, Butanol, Isopropanol, Isobutanol, tert.-Butanol. Nach Bedarf können dem Alkohol auch weitere Lösungsmittel zugesetzt werden, wie Wasser, Ketone, Ester, Amide, Glykole, Aromaten, halogenierte Kohlenwasserstoffe. Diese zusätzlichen Lösungsmittel dürfen allerdings nur in solchen Mengen angewandt werden, daß das erfindungsgemäße Polyamid in dem resultierenden Lösungsmittelgemisch löslich bleibt und nicht ausfällt. Der alkoholische Anteil am Lösungsmittel sollte 8, vorzugsweise 20 Gew.-% nicht unterschreiten. Insbesondere sind größere Anteile (mehr als 20 Gew.-%) an hochsiedenden (über etwa 150° C) Lösungsmitteln zu vermeiden, weil sonst das Trocknen der beschichteten Leder zu lange dauert.

Die erfindungsgemäß hergestellten Polyamide sind gekennzeichnet durch Viskositätszahlen $[\eta]$ über 1,5, vorzugsweise zwischen 1,5 und 3,5 dl/g, gemessen im Kapillarviskosimeter in Dichlorbenzol/Phenol im Gewichtsverhältnis 2 : 3 bei 25° C.

Den erfindungsgemäß erhältlichen Produkten können selbstverständlich noch weitere, übliche Hilfs- und Zusatzstoffe, wie Stabilisatoren gegen Licht, Hitze oder Verfärbung, Hydrolyseschutzmittel, bakteriostatisch wirksame Substanzen, Fungizide, Weichmacher, Farbstoffe, Pigmente oder ähnliches zugesetzt werden.

Die in den Beispielen genannten Teile und Prozente beziehen sich auf das Gewicht.

## Beispiel 1

In einem Druckreaktor wurde ein Gemisch aus 40 Gew.-Teilen Caprolactam, 20 Gew.-Teilen Adipinsäure-Hexamethylendiamin-Salz, 29,1 Gew.-Teilen 4,4'-Diaminodicyclohexylmethan und 20,9 Gew.-Teilen Dodecandisäure zusammen mit 30 Gew.-% entsalztem Wasser (bezogen auf das Gewicht der Summe der vorgenannten Einsatzstoffe) vorgelegt und 1 Stunde unter Druck bei 20 bar und 270° C kondensiert. Anschließend wurde während weiterer 2 Stunden bei dieser Temperatur entspannt und 3 Stunden drucklos unter Überleiten von Stickstoff nachkondensiert. Das Produkt wurde dann ausgetragen und granuliert.

Die Endgruppenanalyse ergab einen Gehalt an Aminoendgruppen von 800 mVal/kg, der Säuregehalt betrug 12 mVal/kg. Das mittlere Molekulargewicht betrug demnach etwa 2500.

270 Teile dieses Polyamids wurden in einer Mischung aus 540 Teilen Methanol, 540 Teilen Toluol und 450 Teilen Ethanol gelöst. Anschließend wurden 23,75 Teile Isophorondiisocyanat (entsprechend einem Äquivalenzverhältnis Isocyanat zu Aminoendgruppen des Polyamids von 0,989) zugegeben und 1 Stunde bei Raumtemperatur gerührt. Die Lösung wies dann eine Viskosität von 5200 mPas bei 25° C auf, die Viskosität veränderte sich auch über einen längeren Zeitraum nicht mehr. Die Viskositätszahl $[\eta]$ in Dichlorbenzol/Phenol 2 : 3 betrug 2,3 dl/g.

150 Teile der vorstehend beschriebenen Lösung wurden mit einem Verdünnergemisch aus 20% Methanol, 24% Ethanol, 22% Toluol, 13% Ethylglykol, 15% Methylethylketon und 6% Cyclohexanon auf das 2,5fache Volumen aufgefüllt. Diese Lösung wurde mittels einer Tiefdruckrasterwalze auf ein wie üblich bis zur Appretur grundiertes und glanzgestoßenes Ziegenoberleder aufgebracht. Die Auftragsmenge betrug 6 g Feststoff/m² Leder.

Das so appretierte Leder wies einen hohen Glanz und einen glatten, angenehmen Griff auf.

## Physikalische Meßwerte

Bally-Flexometerprüfung nach IUF 20:
    Nach 25 000 Knickungen bei Normaltemperatur keine Beschädigung.

Trocken- und Naßreibechtheit nach IUF 450:
    Nach 1000 Reibtouren trocken und 300 Reibtouren naß keine Beschädigung.

# 0 084 670

Haftung nach IUF:
Haftwerte liegen bei 280 p/cm.

Prüfung der Diffusionsechtheit der Färbung von Leder gegen plastifiziertes PVC nach IUF 442:
Absolute Farbstoffdiffusionsechtheit (Stufe 5 der Grauskala nach DIN 54 002).

## Beispiel 2

169,6 Teile des in Beispiel 1 beschriebenen Polyamids wurden in einem Gemisch aus 339,2 Teilen Methanol, 282,7 Teilen Ethanol und 339,2 Teilen Toluol gelöst und anschließend bei Raumtemperatur mit 14,19 Teilen Isophorondiisocyanat (entsprechend einem Äquivalentverhältnis Isocyanat- zu Amino-Endgruppen des Polyamids von 0,941) versetzt. Das Reaktionsgemisch wurde bei Raumtemperatur 2 Stunden gerührt, die Lösung wies dann eine Viskosität von 1850 mPas bei 25° C auf. Die Viskositätszahl $[\eta]$ in Dichlorbenzol/Phenol 2 : 3 betrug 1,79 dl/g.
100 Teile dieser Lösung wurden mit dem fünffachen Volumen eines Verdünnergemisches, bestehend aus 80 Gew.-% Ethanol, 10 Gew.-% Methanol und 10 Gew.-% Butylglykol, versetzt und auf ein wie üblich bis zur Appretur zugerichtetes vollnarbiges Rindnappaleder mittels einer Druckluftpistole aufgespritzt. Die Auftragsmenge betrug 9 g Feststoff/m$^2$ Leder.
Das appretierte Leder wies einen hohen Glanz und einen glatten, angenehmen Griff auf.

## Physikalische Meßwerte

Bally-Flexometerprüfung nach IUF 20:
Prüflinge nach 50 000 Knickungen bei Normaltemperatur ohne Beschädigung.

Trocken- und Naßreibechtheit nach IUF 450:
Nach 1000 Reibtouren trocken und 300 Reibtouren naß keine Beschädigung.

Haftung nach IUF 470:
Die Haftwerte lagen bei 250 p/cm.

Prüfung der Diffusionsechtheit der Färbung von Leder gegen plastifiziertes PVC nach IUF 442:
Absolute Farbstoffdiffusionsechtheit (Stufe 5 der Grauskala nach DIN 54 002).

## Beispiel 3

Der in Beispiel 1 beschriebene Ansatz wurde wiederholt unter Verwendung von 24,0 Teilen Isophorondiisocyanat, entsprechend einem Äquivalent-Verhältnis Isocyanat zu Aminoendgruppen des Polyamids von 1,00. Die Viskosität der fertigen Lösung betrug 12 500 mPas, die Viskositätszahl $[\eta]$ in Dichlorbenzol/Phenol 2 : 3 betrug 2,54 dl/g.
Die anwendungstechnischen Meßwerte waren denen der Beispiele 1 und 2 ähnlich.

## Beispiel 4

375 Teile des gemäß Beispiel 1 hergestellten Polyamids wurden, wie dort beschrieben, mit 33,66 Teilen Isophorondiisocyanat, entsprechend einem Äquivalentverhältnis Isocyanat zu Aminoendgruppen des Polyamids von 1,009 umgesetzt. Nach beendeter Umsetzung betrug die Viskosität der Lösung 50 000 mPas, die Viskositätszahl $[\eta]$ 3,2 dl/g.
Auch hier ähnelten die anwendungstechnischen Eigenschaften den der bei den Beispielen 1 und 2 gefundenen.

## Beispiel 5

Nach der in Beispiel 1 beschriebenen Arbeitsweise und mit der dort verwendeten Apparatur wurde ein Polyamid aus folgenden Komponenten hergestellt:

40 Teile Caprolactam
20 Teile Adipinsäure-Hexamethylendiamin-Salz
35,5 Teile 2,2-bis-(4-Aminocyclohexyl)-propan
14,5 Teile Adipinsäure

4

Die Endgruppenanalyse ergab einen Gehalt an Aminoendgruppen von 900 mVal/kg, der Säuregehalt betrug 17 mVal/kg. Das entspricht einem mittleren Molekulargewicht von etwa 2180.

250 Teile dieses Polyamids wurden in 1400 Teilen des in Beispiel 1 verwendeten Lösungsmittelgemisches kalt gelöst, mit 24,8 Teilen Isophorondiisocyanat (entsprechend einem Äquivalentverhältnis Isocyanat- zu Amino-Endgruppen des Polyamids von 0,996) versetzt und eine Stunde bei Raumtemperatur gerührt. Die Lösung wies dann eine Viskosität von 3500 mPas bei 25° C auf, die Viskositätszahl war 2,0 dl/g.

100 Teile dieser Lösung wurden mit dem fünffachen Volumen eines Verdünnergemisches, bestehend aus 80% Ethanol, 10% Methanol und 10% Butylglykol, versetzt und auf ein wie üblich bis zur Appretur zugerichtetes vollnarbiges Rindnappaleder mit Hilfe der Druckluftpistole aufgespritzt. Die Auftragsmenge betrug 9 g Feststoff/m² Leder. Das appretierte Leder besaß einen hohen Glanz und einen glatten, angenehmen Griff.

### Physikalische Meßwerte

Bally-Flexometerprüfung (Knickelastizität) nach IUF 20:
Prüflinge nach 50 000 Knickungen bei Normaltemperatur ohne Beschädigung.

Trocken- und Naßreibechtheit nach IUF 450:
Nach 1000 Reibtouren trocken und 300 Reibtouren naß keine Beschädigung.

Haftung nach IUF 470:
Die Haftwerte lagen bei 250 p/cm.

Prüfung der Diffusionsechtheit der Färbung von Leder gegen plastifiziertes Polyvinylchlorid nach IUF 442:
Absolute Farbstoffdiffusionsechtheit (Stufe 5 der Grauskala nach DIN 54 002).

### Beispiel 6

Nach dem in den vorstehenden Beispielen beschriebenen Verfahren wurde ein Polyamid aus folgenden Komponenten hergestellt:

40 Teile  Caprolactam
20 Teile  Hexamethylendiamin
30 Teile  Dodecandisäure

Das Produkt wies einen Aminoendgruppengehalt von 820 mVal/kg sowie einen Säuregehalt von 12 mVal/kg auf, entsprechend einem Molekulargewicht von etwa 2400.

250 Teile dieses Polyamids wurden in 1400 Teilen Methanol kalt gelöst und mit 26,5 Teilen 4,4'-Diisocyanato-Dicyclohexylmethan versetzt. Das Zahlenverhältnis der Isocyanatgruppen zu Amino-Endgruppen lag also bei 0,92. Das Reaktionsgemisch wurde eine Stunde bei Raumtemperatur gerührt, es wies dann eine Viskosität von 8000 mPas bei 25° C auf, die Viskositätszahl betrug 2,3 dl/g.

150 Teile dieser Lösung wurden mit einem Verdünnergemisch aus 20% Methanol, 24% Ethanol, 22% Toluol, 13% Ethylglykol, 15% Methylethylketon und 6% Cyclohexanon auf das 2,5fache Volumen aufgefüllt. Diese Lösung wurde mittels einer Tiefdruckrasterwalze auf ein wie üblich bis zur Appretur grundiertes und glanzgestoßenes Ziegenoberleder aufgebracht. Die Auftragsmenge betrug 6 g Feststoff/m² Leder.

Das so appretierte Leder hatte einen hohen Glanz und einen glatten, angenehmen Griff.

### Physikalische Meßwerte

Bally-Flexometerprüfung nach IUF 20:
Nach 25 000 Knickungen bei Normaltemperatur keine Beschädigung.

Trocken- und Naßreibechtheit nach IUF 450:
Nach 1000 Reibtouren trocken und 300 Reibtouren naß keine Beschädigung.

Haftung nach IUF 470:
Die Haftwerte lagen bei 280 p/cm².

Prüfung der Diffusionsechtheit der Färbung von Leder gegen plastifiziertes Polyvinylchlorid nach

5

IUF 442:
Absolute Farbstoffdiffusionsechtheit (Stufe 5 der Grauskala nach DIN 54 002).


Beispiel 7

Nach dem vorstehend beschriebenen Verfahren wurde ein Polyamid-Oligomeres aus folgenden Komponenten hergestellt:

40 Teile  Caprolactam
20 Teile  Adipinsäure-Hexamethylendiamin-Salz
33 Teile  3,3'-Dimethyl-4,4'-diaminodicyclohexylmethan
17 Teile  Azelainsäure

Die Endgruppenanalyse ergab einen Gehalt an Aminoendgruppen von 953 mVal/kg, der Säuregehalt betrug 14 mVal/kg, entsprechend einem Molekulargewicht von etwa 2070.

300 g dieses Polyamid-Oligomeren wurden in 1700 g des in Beispiel 1 verwendeten Lösungsmittelgemisches aus Methanol, Ethanol und Toluol gelöst, mit 23,5 g Hexan-1,6-diisocyanat (entsprechend einem Isocyanatgruppen- zu Aminoendgruppen-Verhältnis von 0,88) versetzt und eine Stunde bei Raumtemperatur gerührt. Die Lösung wies dann eine Viskosität von 1500 mPas bei 25°C auf, die Viskositätszahl betrug 1,75 dl/g.

Die anwendungstechnischen Eigenschaften waren den nach Beispiel 6 erhaltenen ähnlich.


**Patentansprüche**

1. Verfahren zur Herstellung von alkoholischen Lösungen von Hochpolymeren mit Grenzviskositätszahlen [$\eta$] über 1,5 dl/g, dadurch gekennzeichnet, daß man aliphatische oder cycloaliphatische Polyamide mit Molekulargewichten zwischen 800 und 5000 und Säuregehalten unter 50 mVal/kg mit soviel mindestens eines aliphatischen und/oder cycloaliphatischen Diisocyanates in alkoholischer Lösung bei Temperaturen zwischen 15 und 80°C vermischt, daß das Zahlen-Verhältnis der Isocyanatgruppen zu Aminoendgruppen des Polyamids zwischen 0,85 und 1,05 liegt.

2. Verfahren nach Anspruch 1, dadurch gekennzeichnet, daß man dazu Polyamide mit Molekulargewichten von 1000 bis 3000 und Säuregehalten unter 30 mVal/kg einsetzt.

3. Verwendung der gemäß Anspruch 1 oder 2 erhältlichen Hochpolymerlösungen zum Beschichten von Leder.


**Claims**

1. A process for the preparation of alcoholic solutions of high polymers having an intrinsic viscosity [$\eta$] of more than 1.5 dl/g, wherein an aliphatic or cycloaliphatic polyamide having a molecular weight of from 800 to 5000 and an acid content of less than 50 milliequivalents/kg is mixed with such an amount of at least one aliphatic and/or cycloaliphatic diisocyanate in alcoholic solution, at a temperature of from 15 to 80°C, that the ratio of isocyanate groups to terminal amino groups of the polyamide is from 0.85 : 1 to 1.05 : 1.

2. A process as claimed in claim 1, wherein a polyamide having a molecular weight of from 1000 to 3000 and an acid content of less than 30 milliequivalents/kg is used.

3. The use of the solutions of high polymers, obtainable according to claim 1 or 2, for coating leather.


**Revendications**

1. Procédé de préparation de solutions alcooliques de hauts polymères d'indices de viscosité ($\eta$) supérieurs à 1,5 dl/g, caractérisé par le fait que l'on mélange des polyamides aliphatiques ou cycloaliphatiques de poids moléculaires compris entre 800 et 5000 et de teneur en acide inférieure à 50 mVal/kg avec suffisamment d'au moins un diisocyanate aliphatique et/ou cycloaliphatique, à des températures comprises entre 15 et 80°C, pour que le rapport entre les nombres des groupes isocyanate et des groupes terminaux amino du polyamide soit compris entre 0,85 et 1,05.

2. Procédé selon la revendication 1, caractérisé par le fait qu'on introduit des polyamides de poids moléculaires de 1000 à 3000 et de teneurs en acide inférieures à 30 mVal/kg.

3. Utilisation des solutions de hauts polymères obtenues selon la revendication 1 ou 2 pour l'enduction du cuir.